# EUROPEAN PATENT APPLICATION

(11) **EP 4 797 171 A1**
(43) Date of publication of application: **26.08.2026**
(21) Application number: 25315060.1
(22) Date of filing: 21.02.2025
(51) Int. Cl.: G06Q 10/063, G06Q 10/0631

(54) **METHOD AND SYSTEM FOR AIRCRAFT TURNAROUND READINESS OPTIMIZATION**

(71) Applicant: AIRBUS OPERATIONS (S.A.S.), 31060 Toulouse (FR); AIRBUS Operations GmbH, 21129 Hamburg (DE)
(72) Inventor: Rottmann, Felix, 21129 Hamburg (DE); Thoerner, Sascha, 31060 Toulouse (FR)
(74) Representative: BCF Global

(57) **Abstract**

A method and system for aircraft turnaround readiness optimization, involving: receiving (301) target information data related to passengers' onboarding, selected turnaround tasks on an aircraft, and the aircraft schedule; receiving (302) progress information data related to progress of execution of passengers' onboarding and of the selected turnaround tasks; calculating (303) an estimate for the time of completion of the selected turnaround tasks, by comparing the corresponding target information data and progress information data; providing (304) the calculated estimate to at least an aircraft operator; and receiving (305) from the aircraft operator a subset of the selected turnaround tasks.

## Description

### FIELD

The present technology relates to aircraft operation, and more particularly to a method and system for aircraft turnaround readiness optimization.

### BACKGROUND

Efficient processing of tasks on an aircraft parked at an airport in preparation for turnaround is crucial to optimal exploitation of a fleet by an airline. Tasks involved include cleaning, refueling, water refilling, maintenance checks, baggage and cargo loading, catering, passenger boarding, technical maintenance, etc. with each task having a defined chronology and duration, and specific dependencies, on each other and on the availability of ground and cabin crews. Efficiency is defined as the consistent ability to close the aircraft doors in time for the departure time slot, while ensuring safety of the whole process. It requires constant communication between air traffic control, ground and cabin crews, and airlines, to ensure smooth coordination, and help anticipate potential delays.

Tools have been made available to assist recognizing the critical path of tasks at hand, identifying which tasks to prioritize and which to complete concurrently.

However, even though such tools may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

The following summary is for illustrative purposes only, and is not intended to limit or constrain the detailed description. The following summary merely presents various described aspects in a simplified form as a prelude to the more detailed description provided below.

Implementations of the present technology have been developed at least in part based on developers' appreciation of shortcomings associated with the prior art. Developers of the present technology have devised generally a method and system for aircraft turnaround readiness optimization.

More particularly, in an aspect of the present technology, there is provided a method for aircraft turnaround readiness optimization, comprising the steps of:
A- receiving target information data related to passengers' onboarding, selected turnaround tasks on an aircraft, comprising at least: (i) cargo loading, (ii) refueling, (iii) water refilling, (iv) waste water draining, (v) baggage loading, and (vi) catering supplies loading, and the aircraft schedule;
B- receiving progress information data related to progress of execution of passengers' onboarding and of the selected turnaround tasks;
C- calculating an estimate for the time of completion of the selected turnaround tasks, by comparing the corresponding target information data and progress information data;
D- providing the calculated estimate to at least an aircraft operator; and
E- receiving from the aircraft operator a subset of the selected turnaround tasks, and repeating the steps B to E, using the subset as the selected turnaround tasks, until completion of the subset of selected turnaround tasks.

In embodiments of the method, the estimate for the time of completion of the selected turnaround tasks is calculated with the selected turnaround tasks being performed serially.

In embodiments of the method, the estimate for the time of completion of the selected turnaround tasks is calculated with the selected turnaround tasks being performed in parallel.

In embodiments, the method further comprises determining among the selected turnaround tasks, a first group of selected turnaround tasks that may be performed serially, and a second group of remaining selected turnaround tasks that may be performed in parallel, wherein the estimate for the time of completion of the selected turnaround tasks is calculated with the first group being performed serially, and the second group being performed in parallel.

In embodiments of the method, the calculated estimate is provided to at least an aircraft operator at regular time intervals.

In another aspect of the present technology, there is provided an aircraft turnaround readiness optimization application configured to:
A- receive target information data related to passengers' onboarding, selected turnaround tasks on an aircraft, comprising at least: (i) cargo loading, (ii) refueling, (iii) water refilling, (iv) waste water draining, (v) baggage loading, and (vi) catering supplies loading, and the aircraft schedule;
B- receive progress information data related to progress of execution of passengers' onboarding and of the selected turnaround tasks;
C- calculate an estimate for the time of completion of the selected turnaround tasks, by comparing the corresponding target information data and progress information data;
D- provide the calculated estimate to at least an aircraft operator; and
E- receive from the aircraft operator a subset of the selected turnaround tasks, and repeat the steps B to E, using the subset as the selected turnaround tasks, until completion of the subset of selected turnaround tasks.

In embodiments, the aircraft turnaround readiness optimization application is further configured to determine among the selected turnaround tasks, a first group of selected turnaround tasks that may be performed serially, and a second group of remaining selected turnaround tasks that may be performed in parallel, wherein the estimate for the time of completion of the selected turnaround tasks is calculated with the first group being performed serially, and the second group being performed in parallel.

In embodiments of the aircraft turnaround readiness optimization application, the first group and the second group of selected turnaround tasks are provided to the aircraft turnaround readiness optimization application by at least one user terminal.

In another aspect of the present technology, there is provided an aircraft (100) comprising:
- at least one database; and
- the aircraft turnaround readiness optimization application above, communicably connected to the at least one database; wherein
- target information data are input by at least one user terminal into the at least one database; and
- progress information data are input by aircraft sensors, or progress monitoring applications communicably connected to the aircraft turnaround readiness optimization application, or at least one user terminal, into the at least one database.

In another aspect of the present technology, there is provided a computer-readable medium comprising instructions which, when executed by a processing unit, cause the processing unit to perform the method above.

In the context of the present specification, a "server" is a computer program that is running on appropriate hardware and is capable of receiving requests (e.g., from administrator devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers.

In the context of the present specification, "user device" is any computer hardware that is capable of running software appropriate to the relevant task at hand. Thus, some (non-limiting) examples of user devices include personal computers (desktops, laptops, notebooks, etc.), smartphones, and tablets, etc. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "component" is meant to include software (appropriate to a particular hardware context) that is both necessary and sufficient to achieve the specific function(s) being referenced.

In the context of the present specification, unless expressly provided otherwise, the expression "computer-readable medium" and "memory" are intended, unless more specifically defined in the description, to include media of any nature and kind whatsoever, non-limiting examples of which include RAM, ROM, disks (CD-ROMs, DVDs, floppy disks, hard disk drives, etc.), USB keys, flash memory cards, solid state-drives, and/or tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, a "network" is intended to include a configuration of devices and software that are in mutual communication and can exchange information, including data and instructions. Such communication is accomplished by the presence of a direct physical connection between devices (i.e., wired communication) and/or indirectly by electromagnetic or other non-physically connected communication (i.e., wireless communication), using whatever protocols are existing between the two devices. A network can include arbitrary numbers and types of devices, systems, and applications, which, in some exemplary, illustrative, non-limiting embodiments, function in accordance with established policies. In some networks, the networking devices, systems and applications comprised in the network can change over time, as can their configurations, locations and other parameters as networking devices are connected or disconnected from the network whether purposely or inadvertently.

Networking devices may be equipment such as switches, routers, gateways, or the like, that are designed to provide services of communication between user devices, or other networking devices.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a data object with respect to a particular object storage device, or some other means of directing the recipient of the indication to a network location, memory address, database table, or other location where the data object may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures in which like numerals indicate similar elements:
Figure 1 is a schematic diagram of an aircraft equipped with the present technology;
Figure 2 represents a system in accordance with implementations of the present technology;
Figure 3 is a flow chart of steps of a method in accordance with implementations of the present technology; and
Figure 4 represents a computing system that may be used as part of the present technology.

It should also be noted that, unless otherwise explicitly specified herein, the drawings may not be drawn to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", "processing unit", "computer" or "computing system" etc., may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a Central Processing Unit (CPU) or a processor dedicated to a specific purpose, such as a Digital Signal Processor (DSP). Moreover, explicit use of the term a "processor" should not be construed to refer exclusively to hardware capable of executing software, and may implicitly include, without limitation, Application Specific Integrated Circuit (ASIC), Field Programmable Gate Array (FPGA), flash memory, Read-Only Memory (ROM) for storing software, Random Access Memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

It is to be expressly understood that the figures merely depict illustrative implementations of the present technology. Thus, the description thereof that follows is intended to be only a description of illustrative examples of the present technology. In some cases, what are believed to be helpful examples of modifications to the present technology may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the present disclosure may provide in certain instances simple implementations of the present technology, and that where such is the case they have been presented in this manner as an aid to understanding. As persons skilled in the art would understand, various implementations of the present technology may be of a greater complexity.

With these fundamentals in place, we will now consider some non-limiting examples to illustrate various implementations of aspects of the present technology.

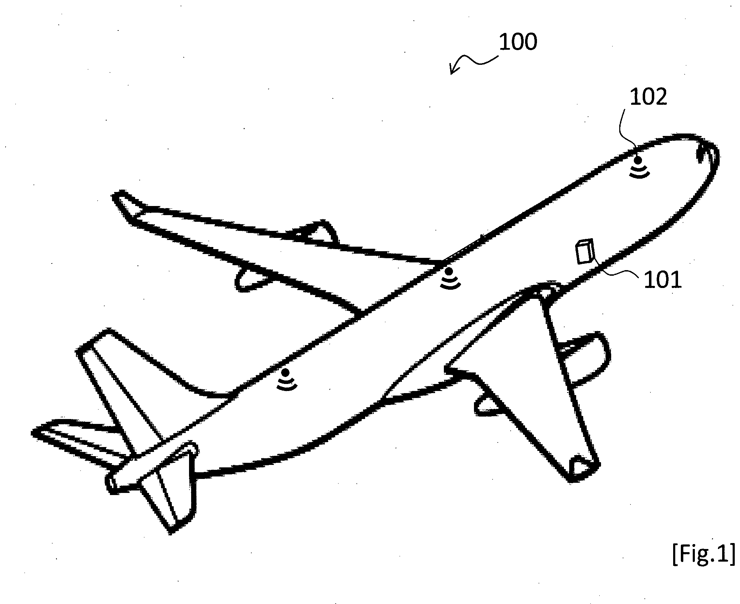

Referring to Figure 1, there is shown an example of an aircraft equipped with the present technology. An aircraft 100 is equipped with an onboard central server 101, and one or several access points to an onboard wireless network, such as Cabin Wireless LAN Units (CWLU) 102. This onboard wireless network is not usable by passengers, and is dedicated to aircraft 100 operation, for example maintenance, preparation or surveillance of the aircraft. It is also securely independent from cellular networks and access, and may be powered by the aircraft own power circuit.

As is known to the person skilled in the art, the onboard central server 101 may host and run specific software and applications, and communicate with and to, the onboard wireless network through access points 102.

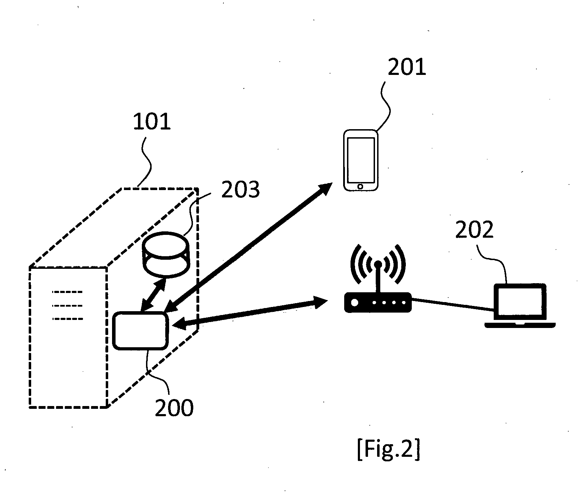

Figure 2 represents a system in accordance with implementations of the present technology. An aircraft turnaround readiness optimization application 200 may be hosted, and run, on the onboard central server 101. The aircraft turnaround readiness optimization application 200 may be communicatively connected to one or several user terminals, such as for example a cell phone 201, or a computer 202.

The communication link between the aircraft turnaround readiness optimization application 200 and the user terminals such as the cell phone 201 or the computer 202, may be wireless, ie may use radio waves, and may involve data communication standards such as Bluetooth, Wifi, or Cellular data service, etc.

Further, the aircraft turnaround readiness optimization application 200 may be communicatively connected to one or several databases 203. Part or all of such databases 203 may be implemented as part of the onboard central server 101 (as represented), or outside of it, and the communication link between the aircraft turnaround readiness optimization application 200 and the databases 203 may be wired. Part or all of the cell phone 201 and the computer 202 may store data in the databases 203, through aircraft turnaround readiness optimization application 200 (as represented), or bypassing it as the case may be (not represented).

Databases 203 may provide the aircraft turnaround readiness optimization application 200 with target information data related to turnaround tasks, such as, without limitation:
- refueling needs/requests;
- water and waste tank needs/requests;
- lost baggage and/or cargo (container, pallet, etc.) status loading mapped with load inspection report and cargo baggage load sheet;
- catering loading status mapped with catering plan and supplies needs/requests;
- passenger manifest; and/or
- technical maintenance needs/requests; etc.

Such target information data may be uploaded in databases 203 including, without limitation, through user terminals such as an aircraft data interface like the computer 202, and/or an off board connectivity (satcom and GSM) like the cell phone 201.

Databases 203 may also provide the aircraft turnaround readiness optimization application 200 with progress information data related to such turnaround tasks in the aircraft 100, such as, without limitation:
- refuel flow, estimated time of refuel completion, etc.;
- increase of water tank level, estimated time of water refilling completion, etc.;
- baggage and/or cargo already loaded/remaining to be loaded;
- catering loading status mapped with catering supplies already loaded/remaining to be loaded;
- passengers already onboard/remaining to be onboarded;
- technical maintenance already executed/remaining to be executed; and/or
- time schedule of execution slots of service turnaround tasks generally.

Such progress information data may be uploaded in databases 203 including, without limitation, through aircraft sensors and other progress monitoring applications communicatively connected to the onboard central server 101 or the aircraft turnaround readiness optimization application (200) (not represented), and/or through user terminals such as the cell phone 201, and/or the computer 202.

Databases 203 may also provide the aircraft turnaround readiness optimization application 200 with data related to schedule of the aircraft, such as aircraft arrival and/or departure time, etc. Such aircraft schedule information may be uploaded in databases 203 including, without limitation, through user terminals such as the cell phone 201, and/or the computer 202.

For security reasons, all communication networks between the aircraft turnaround readiness optimization application 200 and respectively the user terminals such as the cell phone 201, and/or the computer 202, the databases 203, the aircraft sensors or the aircraft progress monitoring applications, are independent from the internet.

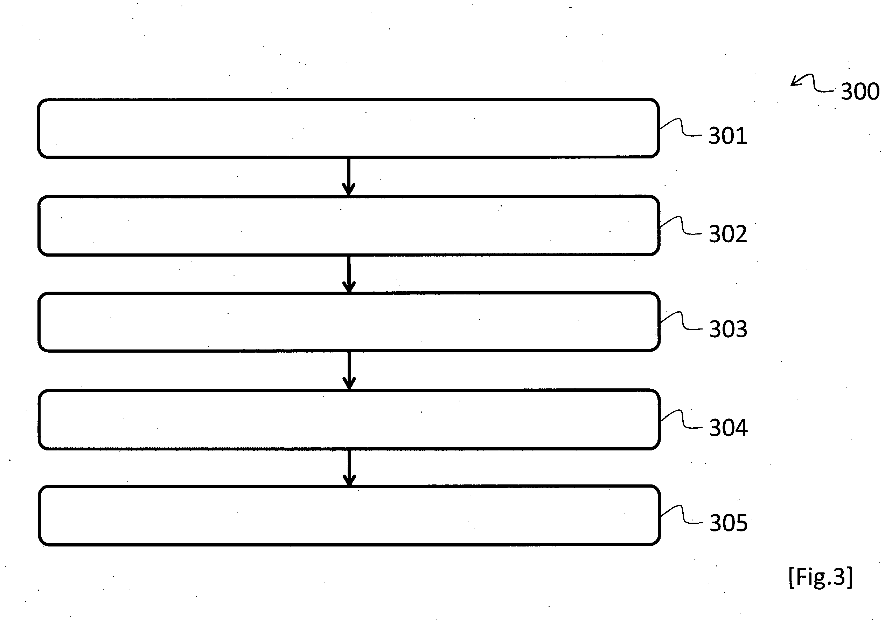

In operation, the aircraft turnaround readiness optimization application 200 may continuously compare the progress information data with the target information data, and provide real time feedback about aircraft readiness to turnaround, to air traffic control, and/or ground and cabin crews, and/or aircraft operator. More specifically, as seen Figure 3, the method, as implemented in the aircraft turnaround readiness optimization application 200 in accordance with the present technology, involves the following steps, in relation to the examples provided above:
- at step 301: receiving target information data related to passengers' onboarding, selected turnaround tasks on an aircraft, comprising at least: (i) cargo loading, (ii) refueling, (iii) water refilling, (iv) waste water draining, (v) baggage loading, and (vi) catering supplies loading, and the aircraft schedule;
- at step 302: receiving progress information data related to progress of execution of passengers' onboarding and of the selected turnaround tasks;
- at step 303: calculating an estimate for the time of completion of the selected turnaround tasks, by comparing the corresponding target information data and the progress information data;
- at step 304: providing (for example by push notification) the calculated estimate, and/or any divergence compared to the aircraft schedule, to at least an aircraft operator;
- at step 305: receiving from the aircraft operator a subset of the selected turnaround tasks, and repeating steps 302 to 305 using the subset as the selected turnaround tasks, until completion of the subset of selected turnaround tasks.

As regard execution of step 301 (receiving target information data related to passengers' onboarding, selected turnaround tasks on an aircraft and aircraft schedule):
- other target information data may also be received, for example in relation to technical maintenance requirements; for example, target information data in relation to aircraft parts replacement or repair requirements may also be received;
- target information data may be uploaded in databases 203 through user terminals and off board connectivity such as satcom or the cell phone 201, and/or aircraft data interface like the computer 202;
- target information data may also be received before the aircraft lands so as to further optimize aircraft turnaround readiness; for example, requirements for technical maintenance may be received while the aircraft is in flight, either communicated by monitoring systems onboard the aircraft (not represented) or uploaded in databases 203 through user terminals and off board connectivity such as satcom or the cell phone 201, and/or aircraft data interface like the computer 202, so that for example, a replacement part becomes readily available when the aircraft lands.

As regard execution of step 302 (receiving progress information data related to execution of passengers' onboarding and of the selected turnaround tasks), as further examples:
- a progress monitoring application communicatively connected to both aircraft fuel sensors, and the onboard central server 101, may provide the databases 203 (and ultimately the aircraft turnaround readiness optimization application 200) with progress information data such as a flow speed of fuel measured by the aircraft fuel sensors;
- the same may apply with respect to water refilling and a water truck; in addition, a progress monitoring application communicatively connected to both sensors mounted on the aircraft water tank, and the onboard central server 101, may provide the databases 203 (and ultimately the aircraft turnaround readiness optimization application 200) with progress information data such as a remaining level of water in the aircraft water tank;
- a progress monitoring application communicatively connected to the onboard central server 101, may provide the databases 203 (and ultimately the aircraft turnaround readiness optimization application 200) with progress information data regarding the cargo loading, such as scanned identification numbers for cargo containers already loaded/remaining to be loaded, etc;
- other progress monitoring application communicatively connected to the onboard central server 101, may provide the databases 203 (and ultimately the aircraft turnaround readiness optimization application 200) with progress information data in relation to any other selected turnaround tasks.

As regard execution of step 303 (calculating an estimate for the time of completion of the selected turnaround tasks):
- calculating the estimate may involve a calculation in case the selected turnaround tasks are performed serially, or in parallel;
- calculating the estimate may involve a calculation in case certain of the selected turnaround tasks are performed serially, while others are performed in parallel; in such a case, the ability to determine which tasks may be performed serially or in parallel may be conferred in various non limitative ways. For example, such ability may be "hard-coded" in onboard central server 101, which may provide the databases 203 (and ultimately the aircraft turnaround readiness optimization application 200) with data related to serial or parallel performance of selected turnaround tasks. For example, data related to serial or parallel performance of selected turnaround tasks may be uploaded in databases 203 through user terminals and off board connectivity such as satcom or the cell phone 201, and/or aircraft data interface like the computer 202.

As regard execution of step 304 (providing the calculated estimate and/or any divergence):
- the calculated estimate may be communicated (as a push notification or on request, at regular intervals or on request, etc.) by the aircraft turnaround readiness optimization application 200 to user terminals such as the cell phone 201, and/or the computer 202 so as to keep at least the aircraft operator informed of the progress of completion of turnaround tasks;
- in embodiments, other interested parties such as air traffic control, and/or ground and cabin crews, etc. may also be provided the calculated estimate by the aircraft turnaround readiness optimization application 200.

As regard execution of step 305 (receiving from the aircraft operator a subset of the selected turnaround task), the aircraft operator may decide to reduce the subset of selected turnaround tasks on which the estimate for the time of completion is calculated.

Through the present technology, is thus provided a centralized real time estimate of completion of aircraft turnaround tasks to, for example, assist an aircraft operator, upon completion of passengers' onboarding, in deciding for each turnaround task, to complete it, or stop its execution at the then current level of completion, and close the aircraft doors in time for the departure time slot.

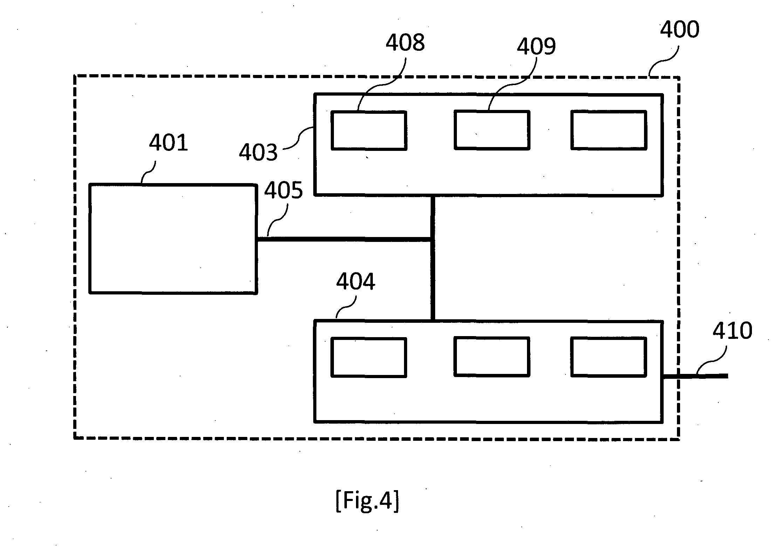

Figure 4 illustrates a computing system that may be used in the present technology, for example in any one of, or a subset of, or all of the elements of Fig.2. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the Computing system 400 may comprise various hardware components including one or more single or multi-core processors collectively represented by a Processor 401, a Memory 403 and an Input/output interface 404. In this context, the Processor 401 may or may not be included in a FPGA. In some other aspect, the Computing system 400 may be an "off the shelf" generic computing system. In some aspect, the Computing system 400 may also be distributed amongst multiple systems. The Computing system 400 may also be specifically dedicated to the implementation of the present technology. As a person in the art of the present technology may appreciate, multiple variations as to how the Computing system 400 is implemented may be envisioned without departing from the scope of the present technology.

Communication between the various components of the Computing system 400 may be enabled by one or more internal and/or external Buses 405 (e.g. a PCI bus, universal serial bus, IEEE 1394 "Firewire" bus, SCSI bus, Serial-ATA bus, ARINC bus, etc.), to which the various hardware components are electronically coupled.

The Input/output interface 404 may enable networking capabilities such as wire or wireless access. As an example, the Input/output interface 404 may comprise a networking interface such as, but not limited to, a network port, a network socket, a network interface controller and the like. Multiple examples of how the networking interface may be implemented will become apparent to the person skilled in the art of the present technology.

The Memory 403 may store Code instructions 408, such as those part of, for example, a library, an application, etc. suitable for being loaded into the Memory 403 and executed by the Processor 401 for implementing the method and process steps according to the present technology. The Memory 403 may also store a Database 409. The person skilled in the art will appreciate that any of the Database 409, the Code instructions 408, and generally the Memory 403, may also physically reside outside of the Computing System 400, still within the scope of the present technology.

The Input/output interface 404 may allow Computing System 400 to be communicably connected to other processors through a Connection 410. The input/output interface 404 may enable networking capabilities such as wire or wireless access. As an example, the input/output interface 404 may comprise a networking interface such as, but not limited to, a network port, a network socket, a network interface controller and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network protocol stack, allowing communication among small groups of computers on the same local area network (LAN) and large-scale network communications through routable protocols, such as Internet Protocol (IP).

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method for aircraft turnaround readiness optimization, comprising the steps of:
A- receiving (301) target information data related to passengers' onboarding, selected turnaround tasks on an aircraft, comprising at least: (i) cargo loading, (ii) refueling, (iii) water refilling, (iv) waste water draining, (v) baggage loading, and (vi) catering supplies loading, and the aircraft schedule;
B- receiving (302) progress information data related to progress of execution of passengers' onboarding and of the selected turnaround tasks;
C- calculating (303) an estimate for the time of completion of the selected turnaround tasks, by comparing the corresponding target information data and progress information data;
D- providing (304) the calculated estimate to at least an aircraft operator; and
E- receiving (305) from the aircraft operator a subset of the selected turnaround tasks, and repeating the steps B to E, using the subset as the selected turnaround tasks, until completion of the subset of selected turnaround tasks.

2. The method of claim 1, wherein the estimate for the time of completion of the selected turnaround tasks is calculated with the selected turnaround tasks being performed serially.

3. The method of claim 1, wherein the estimate for the time of completion of the selected turnaround tasks is calculated with the selected turnaround tasks being performed in parallel.

4. The method of claim 1, further comprising determining among the selected turnaround tasks, a first group of selected turnaround tasks that may be performed serially, and a second group of remaining selected turnaround tasks that may be performed in parallel, wherein the estimate for the time of completion of the selected turnaround tasks is calculated with the first group being performed serially, and the second group being performed in parallel.

5. The method of any of the claims 1 to 4, wherein the calculated estimate is provided to at least an aircraft operator at regular time intervals.

6. An aircraft turnaround readiness optimization application (200) configured to:
A- receive (301) target information data related to passengers' onboarding, selected turnaround tasks on an aircraft, comprising at least: (i) cargo loading, (ii) refueling, (iii) water refilling, (iv) waste water draining, (v) baggage loading, and (vi) catering supplies loading, and the aircraft schedule;
B- receive (302) progress information data related to progress of execution of passengers' onboarding and of the selected turnaround tasks;
C- calculate (303) an estimate for the time of completion of the selected turnaround tasks, by comparing the corresponding target information data and progress information data;
D- provide (304) the calculated estimate to at least an aircraft operator; and
E- receive (305) from the aircraft operator a subset of the selected turnaround tasks, and repeat the steps B to E, using the subset as the selected turnaround tasks, until completion of the subset of selected turnaround tasks.

7. The aircraft turnaround readiness optimization application (200) of claim 6 further configured to determine among the selected turnaround tasks, a first group of selected turnaround tasks that may be performed serially, and a second group of remaining selected turnaround tasks that may be performed in parallel, wherein the estimate for the time of completion of the selected turnaround tasks is calculated with the first group being performed serially, and the second group being performed in parallel.

8. The aircraft turnaround readiness optimization application (200) of claim 7 wherein the first group and the second group of selected turnaround tasks are provided to the aircraft turnaround readiness optimization application (200) by at least one user terminal (201, 202).

9. An aircraft (100) comprising:
- at least one database (203); and
- the aircraft turnaround readiness optimization application (200) of any of the claims 6 to 8, communicably connected to the at least one database (203); wherein
- target information data are input by at least one user terminal (201, 202) into the at least one database (203); and
- progress information data are input by aircraft sensors, or progress monitoring applications communicably connected to the aircraft turnaround readiness optimization application (200), or at least one user terminal (201, 202), into the at least one database (203).

10. A computer-readable medium comprising instructions which, when executed by a processing unit, cause the processing unit to perform the method of any of the claims 1 to 5.
